# EUROPEAN PATENT SPECIFICATION

(11) **EP 2 463 089 B1**
(45) Date of publication and mention of the grant of the patent: **09.11.2016**
(21) Application number: 11191515.3
(22) Date of filing: 01.12.2011
(51) Int. Cl.: B32B 5/18, B32B 25/04, B32B 37/14, A41D 27/26, A42B 3/12

(54) **Article including a pad and process to manufacture such article**
Kissen enthaltender Artikel und Verfahren zu seiner Herstellung
Article comprenant un tampon et procédé pour préparation d'un tel article

(30) Priority: 07.12.2010 IT VR20100231
(43) Date of publication of application: 13.06.2012
(73) Proprietor: DAINESE S.p.A., Via dell'Artigianato 35 36060 Molvena (Vicenza) (IT)
(72) Inventor: Zanotto, Stefano, 36060 Molvena, Vicenza (IT)
(74) Representative: Manfrin, Marta

(56) References cited:
- EP-A2- 0 423 621
- DE-A1- 10 334 865
- US-A1- 2008 166 508
- US-B1- 6 401 258

## Description

The present disclosure generally refers to an article including a pad, or padding. Such an article is, e.g., a lining for a protection helmet, conventionally also called "interior" for helmet, which is intended to be interposed between a rigid outer cap of the helmet and a user's head.

More specifically, in the field of protection helmets, it is known that the lining has a bonnet-like curved shape and acts as a comfort element. In particular, a known lining comprises a pad or padding and at least one layer, or cover, generally made of fabric. The cover overlaps the pad, on the side of the latter facing a user's head.

Such an article, though advantageous under many standpoints, entails some drawbacks.

A drawback is, e.g., that it is not always possible to provide optimum comfort to a user, since, on the side facing the head, the cover tends to form small folds caused by the curving of the padding. To a user such folds are often irritating, and made worse by the presence of any seam. Discomfort is at times relevant, considering that the helmet has to be tight-fitting on the user's head for safety reasons.

Moreover, the presence of folds and/or seams interferes also with helmet stability, as a perfect and continuous tight-fitting on the head cannot be attained.

A technical problem underlying the present disclosure is to provide an article including a pad, or padding, allowing to overcome at least one of the drawbacks described above, and/or achieving further advantages.

Such a technical problem is solved by an article as defined in independent claim 1 and a process according to claim 14.

In the present description and in the following claims, the expression "article including a pad, or padding," signifies anyone article suitable for an application requiring the presence of a pad, or padding, made of a soft or yielding material, or of adequate flexibility or compressibility, like, e.g.: a protection article in which the pad, or padding, is suitable to protect from impacts or knocks; a comfort article in which the pad, or padding, gives softness or comfort to a product to which the article is associated; an insert, i.e. is an article intended to fill or fill up a cavity of a product to which it is associated.

A product including such article is, e.g.: a protection helmet, in which such article constitutes a lining of the protection helmet; a clothing item or garment in which the article is a protection insert, positioned, for instance, in the region of articulation zones like shoulders, elbows or knees, for protecting such zones; a footwear in which such article is arranged in the region of suitable zones of the footwear for comfort purposes, or in free spaces of the footwear for adapting the footwear size to a user's foot; a furniture object or component such as a couch or an armchair, in which such article is, e.g., a cover, or an insert, of the couch or of the armchair.

In the present description and in the following claims, the term "pad" signifies a monolayer or multilayer padding or mat, needwise of soft material, and therefore exhibiting a relatively low compressive strength.

In the present description and in the following claims, the expression "first layer" signifies a piece made of an at least partially elastic material, such as a fabric, a cloth, a mesh, or other material, for instance of lycra, preferably suitable for contacting the human body, in case of clothing, protection helmets or footwear, and which may be fixed adhering to the pad during a step wherein such first layer is elastically deformed, and may return into an undeformed, totally undeformed or partially undeformed condition once the deforming action (i.e., the action causing elastic deformation) has ended, so that the pad may be curved.

Secondary characteristics of the subject of the present disclosure are defined in the corresponding dependent claims.

The subject of the present disclosure provides some relevant advantages.

A first advantage of the article according to the present disclosure is that, thanks to the use of a first layer or first piece, made of an at least partially elastic material, and to an elastic return of said first layer, it is possible to obtain an article in which the first layer, in a curved condition, makes substantially no folds, or makes folds in a reduced number, or just very slight ones. Such a first layer is, in some cases, intended to be arranged on a side of the pad intended to be facing the user, like e.g. in the case of a helmet or a clothing item or footwear, to anatomically conform to a corresponding curved region of a user's body, like the head or an articulation zone.

An advantage of the process is that the pad assumes a curved arrangement or configuration, substantially automatically, thanks to the fact that the fixing of the pad to the first layer occurs preliminarily, when the first layer is in an elastically deformed condition. Thus, by exploiting, as mentioned, the elastic return of the first layer, it is possible to obtain in a very simple and quick way the curved configuration of the entire article.

Obviously, the degree of curving depends on the dimensions of the first layer and of the pad, on the material of the first layer and the material of the pad, as well as on the elastic force which induces the curving of the pad.

In some embodiments, the first layer exhibits biaxial elasticity, so that the elastic return occurs at least along two directions, and a bonnet-like or cap-like curving of the pad be obtained. This bonnet-like or cap-like shape is suitable, e.g., in case of application to a protection helmet, or in a clothing item for articulation protection, so that the article may follow the curving of the outer rigid shell of the helmet, or respectively the anatomical curving of an articulation.

Through openings may be provided in the article, e.g. with a weight-lightening purpose, or to improve adaptability to an item to which the article is associated.

In an embodiment, the article is a sandwich structure including, besides the first layer, a second layer, wherein the pad is included between the first layer and the second layer. This embodiment entails the advantage that it is possible, in a simple way, to entrap and hold the pad stationary between the two layers.

Such second layer can be joined beforehand to the pad and then dragged in a curved position by the first layer together with the pad, or it can be joined to the pad concomitantly to the first layer.

In an embodiment, also the second layer is made of an elastically deformable material. Such second layer deforms elastically when the pad is induced in curved configuration by the first layer.

In an embodiment, the first layer and/or the second layer are glued to the pad; this embodiment entails the advantages of facilitating the operations of fixing the pad to the first layer and/or to the second layer. In case the second layer is present as well, the first layer and the second layer have a surface extension greater than the pad. I n particular, peripheral edges of the first layer and of the second layer projecting with respect to the pad are directly joined to each other.

In an embodiment, gluing occurs by a pressure coupling with preliminary interposition of glue, or adhesive, between the first layer and the pad.

In particular, a layer of glue is interposed between the face of the first layer facing a corresponding face of the pad; and the group including the first layer, the layer of glue and the pad is pressed.

This way to proceed allows to join, in a single operating step, the pad to the first layer.

In case also the second layer is present, a layer of glue and/or of adhesive is interposed also between the face of the second layer facing a corresponding face of the pad; and the group including the first layer, the second layer, the two layers of glue interposed between the first layer and the pad and between the second layer and the pad, are pressed together. This way to proceed allows to join, in a single operating step, the pad to the first layer and to the second layer, and the first layer and the second layer to each other along the above-mentioned peripheral edges, so as to obtain a sandwich structure ready for anyone use, e.g. as inside for helmet.

Other advantages, features and operation steps of the subject of the present disclosure will be made evident in the following detailed description of some preferred embodiments thereof, given by way of example and not for limitative purposes. However, it is evident how each embodiment may entail one or more of the advantages listed above; in any case, it is not required that each embodiment concomitantly entail all of the advantages listed.

It is also to be understood that all possible combinations of the aforeindicated embodiments, and of those described with reference to the following detailed description, fall within the scope of the present disclosure.

Reference will be made to the figures of the annexed drawings, wherein:
- Figure 1 shows a partially sectional side view of a helmet including an article according to the present disclosure;
- Figures 2A-2C show respective sectional side views of an article according to the present disclosure during successive steps of a manufacturing process thereof;
- Figures 3A-3C show respective sectional side views of a further article according to the present disclosure during successive steps of a manufacturing process thereof;
- Figure 4 shows a sectional side view of an article according to the present disclosure in an exploded condition during a machining step thereof;
- Figure 5 shows a rear view of a clothing item including one or more articles according to the present disclosure;
- Figure 6 shows a sectional view along line VI-VI of Figure 5;
- Figure 7 shows a sectional side view of a footwear provided with an article according to the present disclosure.

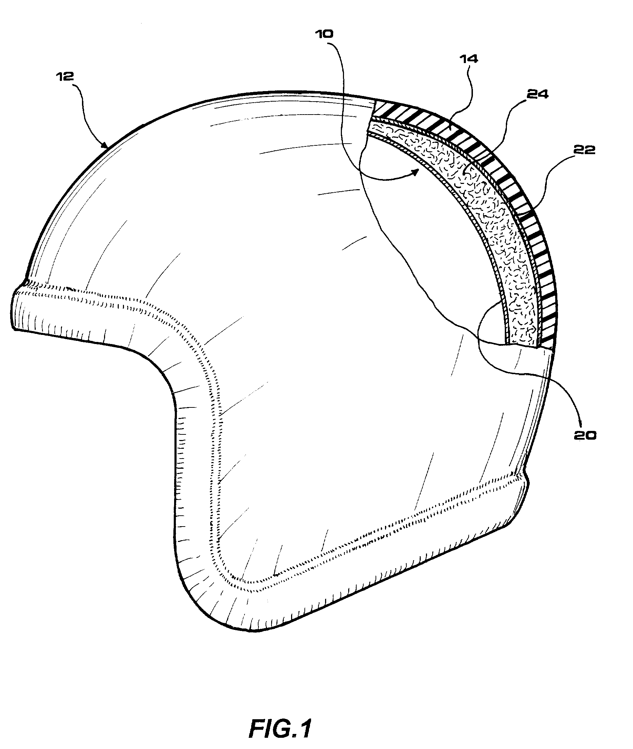

Referring to the annexed figures, by reference number 10 an article according to the present disclosure is indicated, which in the example of Figure 1 is a lining, also called "inside", for helmet 12. The helmet 12 includes an external rigid cap 14.

In particular, in the present description and in the following claims, the term "lining" signifies an assembly which serves to cover an internal or concave side of the cap 14, and to act as soft layer between the head and the rigid cap 14.

The article 10 is intended to be curved bonnet-like to adhere to the shape of a user's head. More specifically, the article 10 is structurally independent from the cap 14 and is fixed to the cap 14, e.g., by Velcro®, snap fasteners or alike fixing systems.

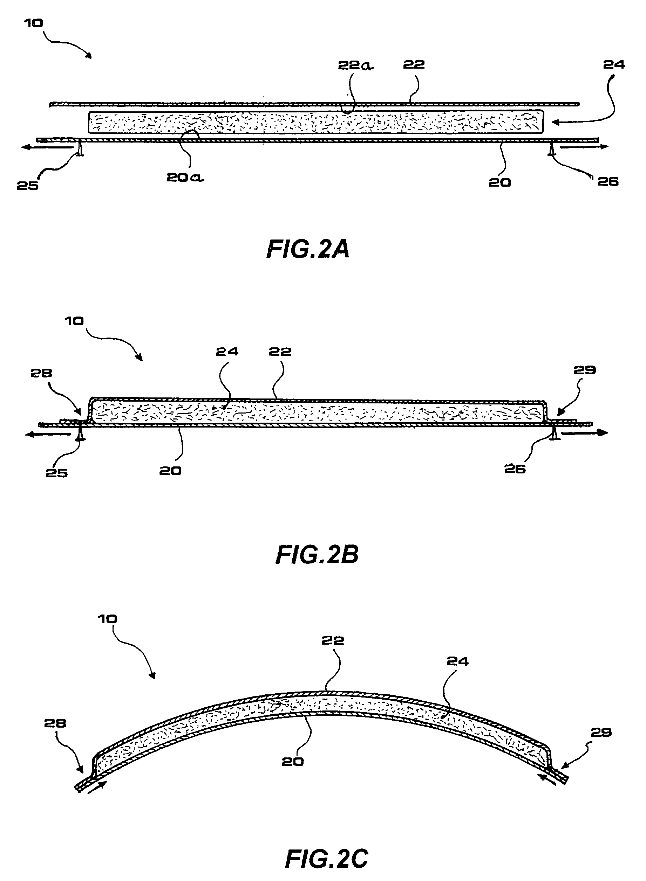

More specifically, in the example of Figures 1 and 2A-2C, the article 10 is a multilayer structure, sandwich-shaped and including a first layer 20, or first piece, or internal leather, a second layer 22, or second piece, or external leather, and a pad 24 of soft material, included between the first layer 20 and the second layer 22.

The first layer 20 and the second layer 22 are made of an elastic or elasticized fabric, like, e.g., lycra, and are able to assume a condition of elastic deformation and an undeformed condition, or of lesser elastic deformation.

The pad 24 is made of a foam, e.g. a conventional sponge.

The pad 24 forms inner core or kernel for the sandwich structure. The pad 24 is depicted in the drawings by a mat or monolayer padding, but it is understood that it may be formed of plural paddings or mats overlapped, depending on the degree of compressive strength to be achieved.

The first layer 20 and the second layer 22 are peripherally connected at respective peripheral edges 28, 29 projecting with respect to the pad 24, optionally by an edge strip, by an adhesive or by a seam, to hold the pad 24 stationary. The pad 24 is fixed to the first layer 20 and to the second layer 22, e.g. by glue/adhesive, not depicted in Figures 2A-2C, spread over all the surface on the faces 20a, 22a of contact between the pad 24 and the first layer 20 and the second layer 22.

According to an aspect of the present disclosure, the first piece 20, when lying in the original or elastically undeformed condition, exerts a pulling or tensile action on the pad 24 and holds the pad 24 in a curved condition.

In other words, the first layer 20 is such as to induce a curving of the pad 24.

This effect is obtained thanks to the fact that the first layer 20, when lying in an elastically deformed condition, is joined to the pad 24 and, in passing from a condition of elastic deformation to an original undeformed condition, or also of lesser elastic deformation, drags therewith the pad 24, and causes a curving thereof. In practice, by exploiting the elastic return of the first layer 20, an article 10 is obtained in which the first layer 20 is substantially without folds and seams.

In practice, in the article 10 according to the present disclosure, an elastically deformed condition of the first layer 20 corresponds to an undeformed state of the pad 24, whereas an elastically undeformed condition of the first layer 20 corresponds to a curved deformed state of the pad 24.

Referring to Figures 2A-2B, such a result is obtained by the following process. The first layer 20, the pad 24 and the second layer 22 are overlapped.

On the face 20a of the first layer 20 and on the face 22a of the second layer 22 facing the pad 24, glue/adhesive (not depicted) is located, which is spread or arranged in points. Alternatively, glue/adhesive films may be provided.

The glue may be preliminarily spread on the faces 20a, 22a to form a laminate. In other words, the glue and/or the adhesive may be present on faces 20a, 22a, and/or only on face 20a, in case the second layer 22 or second piece 22 is absent. The first layer 20 is deformed elastically, by drawing respective ends on a frame represented by elements 25, 26, which keep in a deformed condition the first layer 20 during gluing of the first layer 20 and the second layer 22.

Moreover, as can be seen from Figure 2B, during gluing, by keeping the first layer 20 elastically deformed, the peripheral edges of the first layer 20 and of the second layer 22 are glued directly to each other, to form the sandwich structure.

Subsequently, the sandwich structure is detached from the elements 25, 26 of the frame, so that the first layer 20 elastically returns into an undeformed or original condition.

The elastic return of the first layer 20 causes a curving of the entire sandwich structure, as the mat 24 and the second layer 22 are glued to the first layer 20. Pulling of the second layer 22 is facilitated by direct connection at the peripheral edges 28, 29.

As to the second layer 22, it is further observed that it, being of elastic material, is slightly deformed elastically, fostering the curving.

This process entails a significant advantage in that the pad 24 is curved homogeneously (thanks to the elasticity of the first layer 20) without evident folds and wrinkling on the surface of the first layer 20. Preferably, it is a biaxial elasticity, allowing to obtain a curving in two directions (referring to a user's head, it is a direction parallel to a sagittal plane and a latero-lateral direction).

Moreover, the process described is very rapid and avoids any lengthy and toilsome seaming phases.

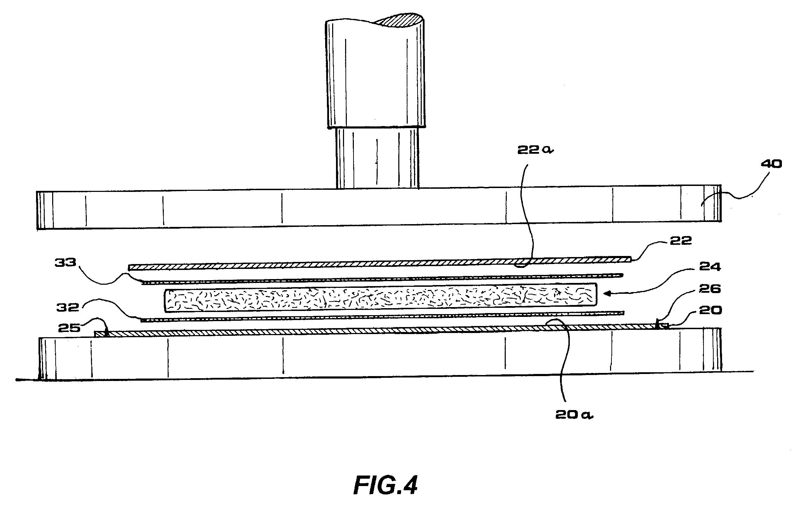

Referring to Figure 4, it is illustrated a variant of the above-described process allowing a further shortening of the operation times. In said variant embodiment, elements which have the same structure and function in the embodiment previously described retain the same reference number, and are not detailed again.

In particular, in this embodiment the joining or gluing of the first layer 20 and of the second layer 22 and the pad 24 comprised between them, is carried out with a gluing by pressure coupling.

Alternatively, in an embodiment not illustrated, a hot-melt gluing may be carried out.

In particular, the first layer 20 and the second layer 22 are provided on the faces 20a, 22b with a respective first glue layer 32 and a second glue layer 33.

The group formed by the first layer 20, the second layer 22, the mat 24 and the respective first glue/adhesive layer 32 and second glue layer 33 comprised between them, is placed in a press 40 to foster adhesion and mutual gluing.

During gluing in the press 40, the first layer 20 is drawn on a frame provided with elements 25, 26 until obtaining adequate elastic deformation.

Upon passing in the press 40, the first layer 20 is left free, returning into an undeformed condition, and causing a curving of the pad 24 and of the second layer 22.

In an embodiment alternative to the methods described above, the second layer 22 is coupled or glued beforehand to the pad 24, to form a single body; therefore, in this alternative embodiment, the coupling, e.g. under a press, occurs between said single body and the first layer 20.

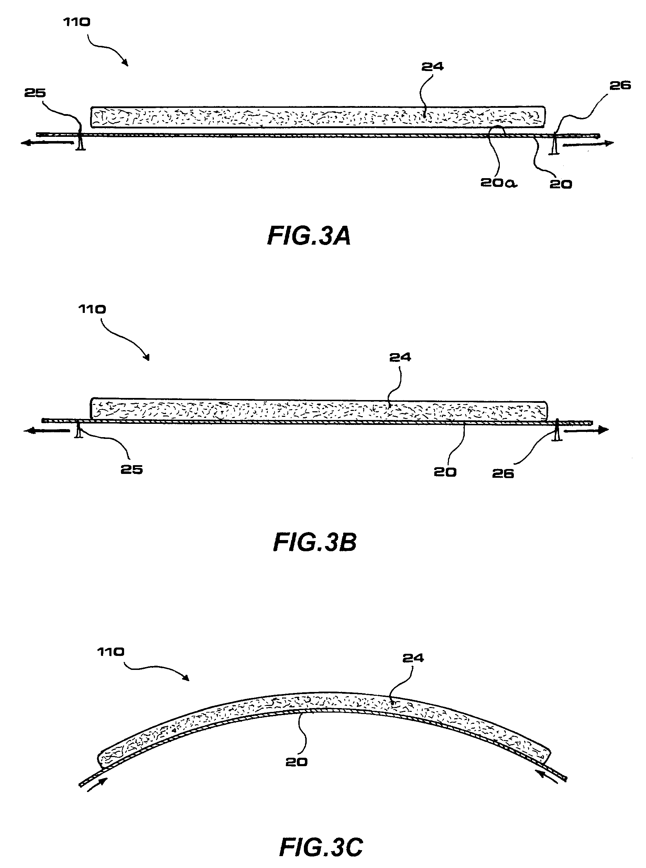

Referring to Figures 3A-3B, it is illustrated a process simplified with respect to those described above. I n said variant embodiment, elements which have the same structure and function in the embodiment previously described retain the same reference number, and are not detailed again.

In particular, in this process, unlike in the preceding ones, the article 110 includes only the first layer 20 and the mat 24.

In this embodiment as well, the fixing by glue is carried out by maintaining in an elastically deformed condition the first layer 20. When the latter is freed from the deformation, it elastically returns into an original condition.

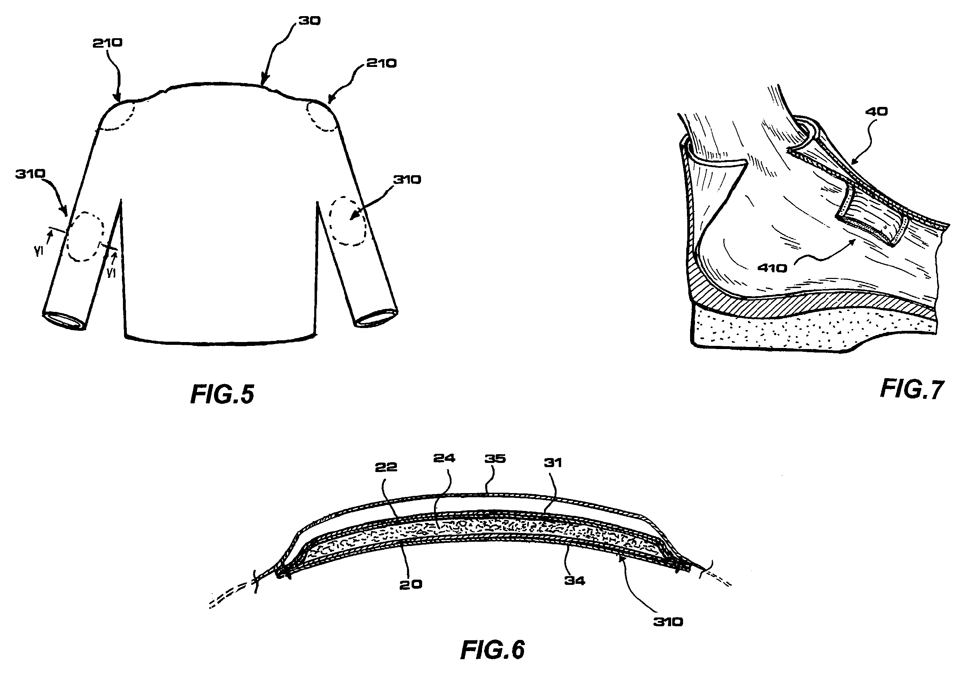

Referring to Figures 5 and 6, articles 210 and 310 according to the present disclosure are illustrated associated to a clothing item 30. For such articles 210, 310, elements which have the same structure and function in the embodiment previously described retain the same reference number, and are not detailed again. In particular, the clothing item 30 is, e.g., a jacket. Each article 210, 310 is arranged beneath an external layer 35 of the clothing item, and arranged, e.g. in a pocket formed by two opposed walls 31, 34 and fixed to the external layer 35.

In practice, the padding of each article is placed so as to match a corresponding curving or curved profile of the clothing item.

Each article 210, 310 is curved and has a concavity anatomically shaped to the body articulation, such as shoulder or elbow, to which it is associated. Such an article may be provided for the knee.

In Figure 7, a further variant of an article 410, applied to a footwear 40, is illustrated. Also in this variant embodiment, the article 410 comprises elements which have the same structure and function in the embodiments previously described, and is manufactured according to the modes previously described.

The subject of the present disclosure has been hereto described with reference to preferred embodiments thereof. It is understood that other embodiments might exist, all falling within the concept of the same invention, and all comprised within the protective scope of the claims hereinafter.

## Claims

1. An article (10, 110, 210, 310, 410) including a pad (24) and at least a first layer (20) having a face (20a) fixed adhering to said pad (24), said at least a first layer (20) being made of an at least partially elastic material and being adapted to assume an elastically undeformed condition, wherein in said elastically undeformed condition said first layer (10) exerts a tensile action on the pad (24) and holds said pad (24) in an at least partially curved state and wherein said curved shape of the first layer and of the pad corresponds to a curving of an anatomical part of the human body.

2. The article (10, 110, 210, 310, 410) according to claim 1, wherein said first layer (20) is glued to said pad (24).

3. The article (10, 110, 210, 310, 410) according to claim 1 or 2, having sandwich structure and including a second layer (22), wherein said pad (24) is included between the first layer (20) and the second layer (22).

4. The article (10, 110, 210, 310, 410) according to claim 3, wherein the second layer (22) is glued to the pad (24).

5. The article (10, 110, 210, 310, 410) according to anyone of the preceding claims, wherein said first layer (20) exhibits an elasticity correlated to the curving of an anatomical part of the human body.

6. The article (10, 110, 210, 310, 410) according to claim 3, 4 or 5, wherein the first layer (20) is peripherally fixed into direct contact with the second layer (22) at respective peripheral edges (28, 29).

7. The article (10, 110, 210, 310, 410) according to anyone of the preceding claims, wherein the first layer (20) is fixed to said pad (24) by pressing of a layer (32) of glue or adhesive interposed between the first layer (20) and the pad (24).

8. The article (10, 110, 210, 310, 410) according to anyone of the preceding claims 3 to 6, wherein the first layer (20) is fixed to said pad (24) by pressing of a first glue or adhesive layer (32) interposed between the first layer (20) and the pad (24), and the second layer (22) is fixed to said pad (24) by pressing of a second glue or adhesive layer (33) interposed between the second layer (22) and the pad (24).

9. The article (10, 110, 210, 310, 410) according to anyone of the preceding claims, wherein said pad (24) is a monolayer or multilayer padding.

10. The article (10, 110, 210, 310, 410) according to anyone of the preceding claims, wherein the first layer (20) exhibits biaxial elasticity.

11. The article (10, 110, 210, 310, 410) according to anyone of the preceding claims in conjunction with a clothing item, wherein said article lines said clothing item and said first layer (20) exhibits an elasticity correlated to a corresponding curved contour of the clothing item.

12. A helmet (12) including an article (10, 110, 210, 310, 410) according to anyone of the claims 1 to 11, said article being adapted to line a cap (14) of the helmet (12).

13. A clothing item, such as a garment (30) or a footwear (40), including an article (10, 110, 210, 310, 410) according to anyone of the claims 1 to 11.

14. A process for manufacturing an article (10, 110, 210, 310, 410), said process comprising the steps of
- preparing a first layer (20) made of an at least partially elastic material;
- elastically deforming said first layer (20);
- while keeping said first layer (20) in an elastically deformed condition, fixing a face (20a) of the first layer (20) adhering to a corresponding face of a pad (24); and
- upon fixing the first layer (20) to the pad (24), letting said first layer (20) elastically return into an elastically undeformed condition;
- wherein, during an elastic return, said first layer (20) induces a curving of said pad (24) to obtain a curved state of the first layer and of the pad,
and wherein said curved shape corresponds to a curving of an anatomical part of the human body.

15. The process according to claim 14, wherein the first layer (20) is fixed to the pad (24) by glue (32), or adhesive.

16. The process according to claim 14 or 15, wherein a second layer (22) is fixed adhering to the pad (24) at the side opposite to the first layer (20), and the pad (24) is interposed between the first layer (20) and the second layer (22).

17. The process according to claim 16, wherein the first layer (20) and the second layer (22) are glued into direct contact at respective edges projecting with respect to the pad (24).

18. The process according to anyone of the claims 14 to 17, wherein the first layer (20) is glued to the pad (24) by pressing, wherein a glue or adhesive layer (32) is interposed between the face (20a) of the first layer (20) and the corresponding face of the pad (24), wherein the group including the first layer (20), the glue layer (32) and the pad (24) is pressed.

19. The process according to anyone of the claims 14 to 18, wherein, after the step of elastic return, said article (10, 110, 210, 310, 410) is used to line a clothing item, and wherein said first layer (20) has an elasticity correlated to a corresponding curved contour of the clothing item and/or of a curving of an anatomical part of the human body.

## Patentansprüche

1. Ein Artikel (10, 110, 210, 310, 410), einschließend ein Polster (24) und zumindest eine erste Schicht (20), aufweisend eine Seite (20a), die an das Polster (24) anhaftend befestigt ist, wobei die zumindest erste Schicht (20) aus einem zumindest partiell elastischen Material hergestellt ist und dazu angepasst ist, einen elastisch unverformten Zustand einzunehmen, wobei in dem elastisch unverformten Zustand die erste Schicht (10) eine Zugwirkung auf das Polster (24) ausübt und das Polster (24) in einem zumindest partiell gekrümmten Zustand hält, und wobei die gekrümmte Form der ersten Schicht und des Polsters einer Krümmung eines anatomischen Teils des menschlichen Körpers entspricht.

2. Der Artikel (10, 110, 210, 310, 410) gemäß Anspruch 1, wobei die erste Schicht (20) an das Polster (24) geklebt ist.

3. Der Artikel (10, 110, 210, 310, 410) gemäß Anspruch 1 oder 2, aufweisend SandwichStruktur, und einschließend eine zweite Schicht (22), wobei das Polster (24) zwischen der ersten Schicht (20) und der zweiten Schicht (22) eingeschlossen ist.

4. Der Artikel (10, 110, 210, 310, 410) gemäß Anspruch 3, wobei die zweite Schicht (22) an das Polster (24) geklebt ist.

5. Der Artikel (10, 110, 210, 310, 410) gemäß einem beliebigen der vorhergehenden Ansprüche, wobei die erste Schicht (20) eine Elastizität aufweist, die mit der Krümmung eines anatomischen Teils des menschlichen Körpers korreliert.

6. Der Artikel (10, 110, 210, 310, 410) gemäß Anspruch 3, 4 oder 5, wobei die erste Schicht (20) unmittelbar in Kontakt mit der zweiten Schicht (22) an jeweils peripheren Kanten (28, 29) peripher befestigt ist

7. Der Artikel (10, 110, 210, 310, 410) gemäß einem beliebigen der vorhergehenden Ansprüche, wobei die erste Schicht (20) an dem Polster (24) durch Pressen einer zwischen die erste Schicht (20) und dem Polster (24) eingefügten Schicht (32) Klebstoff oder Haftmittel befestigt wird.

8. Der Artikel (10, 110, 210, 310, 410) gemäß einem beliebigen der vorhergehenden Ansprüche 3 bis 6, wobei die erste Schicht (20) an dem Polster (24) durch Pressen einer zwischen die erste Schicht (20) und dem Polster (24) eingefügten ersten Klebstoff- oder Haftmittelschicht (32) befestigt wird, und die zweite Schicht (22) an dem Polster (24) durch Pressen einer zwischen die zweite Schicht (22) und dem Polster (24) eingefügten zweiten Klebstoff- oder Haftmittelschicht (32) befestigt wird.

9. Der Artikel (10, 110, 210, 310, 410) gemäß einem beliebigen der vorhergehenden Ansprüche, wobei das Polster (24) eine Einschicht- oder Multischichtpolsterung ist.

10. Der Artikel (10, 110, 210, 310, 410) gemäß einem beliebigen der vorhergehenden Ansprüche, wobei die erste Schicht (20) biaxiale Elastizität aufweist.

11. Der Artikel (10, 110, 210, 310, 410) gemäß einem beliebigen der vorhergehenden Ansprüche in Verbindung mit einem Bekleidungsartikel, wobei der Artikel den Bekleidungsartikel auskleidet und die erste Schicht (20) eine Elastizität aufweist, die mit einer entsprechenden gekrümmten Kontur des Bekleidungsstücks korreliert.

12. Ein Helm (12), der einen Artikel (10, 110, 210, 310, 410) gemäß einem beliebigen der Ansprüche 1 bis 11 einschließt, wobei der Artikel daran angepasst ist, eine Kappe (14) des Helmes (12) auszukleiden.

13. Ein Bekleidungsstück, wie ein Gewand (30) oder ein Schuhwerk(40), der einen Artikel (10, 110, 210, 310, 410) gemäß einem beliebigen der Ansprüche 1 bis 11 einschließt.

14. Ein Verfahren zur Herstellung eines Artikel (10, 110, 210, 310, 410), wobei das Verfahren folgende Schritte umfasst:
- Vorbereiten einer ersten Schicht (20), die aus einem zumindest partiell elastischen Material hergestellt ist;
- elastisches Verformen der ersten Schicht (20);
- während Halten der ersten Schicht (20) in einem elastisch verformten Zustand: Befestigen einer Seite (20a) der ersten Schicht (20) anhaftend an einer entsprechenden Seite des Polsters (24); und
- nach dem Befestigen der ersten Schicht (20) an dem Polster (24): Elastisch Zurückkehren lassen der ersten Schicht (20) in den elastisch nicht verformten Zustand;
- wobei während eines elastischen Zurückkehrens die erste Schicht (20) eine Krümmung des Polsters (24) herbeiführt, um einen gekrümmten Zustand der ersten Schicht und des Polsters zu erhalten, und wobei die gekrümmte Form einer Krümmung eines anatomischen Teils des menschlichen Körpers entspricht.

15. Das Verfahren gemäß Anspruch 14, wobei die erste Schicht (20) mittels Klebstoff (32) oder Haftmittel an dem Polster (24) befestigt wird.

16. Das Verfahren gemäß Anspruch 14 oder 15, wobei eine zweite Schicht (22) an dem Polster (24) an der Seite gegenüber der ersten Schicht (20) anhaftend befestigt wird, und das Polster (24) zwischen der ersten Schicht (20) und der zweiten Schicht (22) angeordnet ist.

17. Das Verfahren gemäß Anspruch 16, wobei die erste Schicht (20) und die zweite Schicht (22) in unmittelbarem Kontakt an jeweiligen Kanten, die in Bezug auf das Polster (24) hervorstehen, geklebt werden.

18. Das Verfahren gemäß einem beliebigen der Ansprüche 14 bis 17, wobei die erste Schicht (20) durch Pressen an das Polster (24) geklebt wird, wobei eine Klebstoff- oder Haftmittelschicht (32) zwischen der Seite (20a) der ersten Schicht (20) und der entsprechenden Seite des Polsters (24) eingefügt ist, wobei die Gruppe, die einschließt: Die erste Schicht (20), die Klebstoffschicht (32) und das Polster (24), gepresst wird.

19. Das Verfahren gemäß einem beliebigen der Ansprüche 14 bis 18, wobei, nach dem Schritt des elastischen Zurückkehrens, der Artikel (10, 110, 210, 310, 410) verwendet wird, um ein Bekleidungsstück auszukleiden, und wobei die erste Schicht (20) eine Elastizität aufweist, die mit einer entsprechenden gekrümmten Kontur des Bekleidungsstücks und/oder einer Krümmung eines anatomischen Teils des menschlichen Körpers korreliert.

## Revendications

1. Article (10, 110, 210, 310, 410) comprenant un coussinet (24) et au moins une première couche (20) ayant une face (20a) fixée par adhérence sur ledit coussinet (24), ladite au moins une première couche (20) étant réalisée avec un matériau au moins partiellement élastique et étant adaptée pour adopter une condition élastiquement non déformée, dans lequel, dans ladite condition élastiquement non déformée, ladite première couche (10) exerce une action de traction sur le coussinet (24) et maintient ledit coussinet (24) dans un état au moins partiellement incurvé, et dans lequel ladite forme incurvée de la première couche et du coussinet correspond à une courbure d'une partie anatomique du corps humain.

2. Article (10, 110, 210, 310, 410) selon la revendication 1, dans lequel ladite première couche (20) est collée audit coussinet (24).

3. Article (10, 110, 210, 310, 410) selon la revendication 1 ou 2, ayant une structure en sandwich et comprenant une seconde couche (22), dans lequel ledit coussinet (24) est inclus entre la première couche (20) et la seconde couche (22).

4. Article (10, 110, 210, 310, 410) selon la revendication 3, dans lequel la seconde couche (22) est collée sur le coussinet (24).

5. Article (10, 110, 210, 310, 410) selon l'une quelconque des revendications précédentes, dans lequel ladite première couche (20) laisse apparaître une élasticité en corrélation avec la courbure d'une partie anatomique du corps humain.

6. Article (10, 110, 210, 310, 410) selon la revendication 3, 4 ou 5, dans lequel la première couche (20) est fixée, de manière périphérique, en contact direct avec la seconde couche (22) au niveau des bords périphériques (28, 29) respectifs.

7. Article (10, 110, 210, 310, 410) selon l'une quelconque des revendications précédentes, dans lequel la première couche (20) est fixée sur ledit coussinet (24) par pression d'une couche (32) de colle ou d'adhésif intercalée entre la première couche (20) et le coussinet (24).

8. Article (10, 110, 210, 310, 410) selon l'une quelconque des revendications 3 à 6, dans lequel la première couche (20) est fixée sur ledit coussinet (24) par pression d'une couche de colle ou d'adhésif (32) intercalée entre la première couche (20) et le coussinet (24), et la seconde couche (22) est fixée sur le coussinet (24) par pression d'une seconde couche de colle ou d'adhésif (33) intercalée entre la seconde couche (22) et le coussinet (24).

9. Article (10, 110, 210, 310, 410) selon l'une quelconque des revendications précédentes, dans lequel ledit coussinet (24) est un rembourrage monocouche ou multicouche.

10. Article (10, 110, 210, 310, 410) selon l'une quelconque des revendications précédentes, dans lequel la première couche (20) laisse apparaître une élasticité biaxiale.

11. Article (10, 110, 210, 310, 410) selon l'une quelconque des revendications précédentes conjointement avec un article vestimentaire, dans lequel ledit article double ledit article vestimentaire et ladite première couche (20) laisse apparaître une élasticité en corrélation avec un contour incurvé correspondant de l'article vestimentaire.

12. Casque (12) comprenant un article (10, 110, 210, 310, 410) selon l'une quelconque des revendications 1 à 11, ledit article étant adapté pour doubler une calotte (14) du casque (12).

13. Article vestimentaire tel qu'un vêtement (30) ou une chaussure (40) comprenant un article (10, 110, 210, 310, 410) selon l'une quelconque des revendications 1 à 11.

14. Procédé pour fabriquer un article (10, 110, 210, 310, 410), ledit procédé comprenant les étapes consistant à :
- préparer une première couche (20) réalisée avec un matériau au moins partiellement élastique ;
- déformer élastiquement ladite première couche (20) ;
- tout en maintenant ladite première couche (20) dans une condition élastiquement déformée, fixer une face (20a) de la première couche (20) adhérant à une face correspondante d'un coussinet (24) ; et
- après avoir fixé la première couche (20) sur le coussinet (24), laisser ladite première couche (20) revenir élastiquement dans une condition élastiquement non déformée ;
- dans lequel, pendant un retour élastique, ladite première couche (20) induit une courbure dudit coussinet (24) pour obtenir un état incurvé de la première couche et du coussinet,
et dans lequel ladite forme incurvée correspond à une courbure d'une partie anatomique du corps humain.

15. Procédé selon la revendication 14, dans lequel la première couche (20) est fixée sur le coussinet (24) avec de la colle (32) ou un adhésif.

16. Procédé selon la revendication 14 ou 15, dans lequel une seconde couche (22) est fixée par adhérence sur le coussinet (24) du côté opposé à la première couche (20) et le coussinet (24) est intercalé entre la première couche (20) et la seconde couche (22).

17. Procédé selon la revendication 16, dans lequel la première couche (20) et la seconde couche (22) sont collées en contact direct au niveau des bords respectifs faisant saillie par rapport au coussinet (24).

18. Procédé selon l'une quelconque des revendications 14 à 17, dans lequel la première couche (20) est collée sur le coussinet (24) par pression, dans lequel une couche de colle ou d'adhésif (32) est intercalée entre la face (20a) de la première couche (20) et la face correspondante du coussinet (24), dans lequel le groupe comprenant la première couche (20), la couche de colle (32) et le coussinet (24), est comprimé.

19. Procédé selon l'une quelconque des revendications 14 à 18, dans lequel, après l'étape de retour élastique, ledit article (10, 110, 210, 310, 410) est utilisé pour doubler un article vestimentaire, et dans lequel ladite première couche (20) a une élasticité en corrélation avec un contour incurvé correspondant de l'article vestimentaire et/ou d'une courbure d'une partie anatomique du corps humain.
